# EUROPÄISCHE PATENTSCHRIFT

(11) **EP 0 508 186 B1**
(45) Veröffentlichungstag und Bekanntmachung des Hinweises auf die Patenterteilung: **15.03.1995**
(21) Anmeldenummer: 92104894.8
(22) Anmeldetag: 20.03.1992
(51) Int. Cl.: A01F 15/10

(54) **Steuerung der Zuführeinrichtung für Erntegut an Ballenpressen**
Feed control of crop material in a baler
Contrôle de l'admission du fourrage dans des presses à ballots

(30) Priorität: 12.04.1991 DE 4111984
(43) Veröffentlichungstag der Anmeldung: 14.10.1992
(73) Patentinhaber: Fortschritt Erntemaschinen GmbH, D-01841 Neustadt (DE)
(72) Erfinder: Oliva, Christoph, O-8353 Langburkersdorf (DE); Berth, Dieter, O-8355 Neustadt (DE); Lange, Hermann, O-8360 Sebnitz (DE); Hohlfeld, Gottfried, O-8355 Neustadt (DE)
(74) Vertreter: Müller, Lutz

(56) Entgegenhaltungen:
- EP-A- 0 120 780
- EP-A- 0 442 108
- GB-A- 2 197 251
- GB-A- 2 219 967

## Beschreibung

Die Erfindung betrifft die Steuerung der Zuführeinrichtung für Erntegut an Ballenpressen, vorzugsweise für Großballenpressen mit etwa horizontal angeordnetem Preßkanal und mit einem darunter befindlichen Rotorförderer mit mehreren Förderrechen, die in zeitlicher Abstimmung mit der Hubbewegung des Preßkolbens das Erntegut erfassen, in mehrere Portionen vorverdichten und danach geschlossen in den Preßkanal fördern.

Zur Gewährleistung einer gleichmäßigen Preßkanalbefüllung sind verschiedenartige Zuführsysteme, die synchron mit dem Preßkolbenhub wirksam werden, bekannt.
Bei der DD-A-272983 ist eine Zuführeinrichtung einer Ballenpresse für landwirtschaftliche Erntegüter beschrieben, bei der die Preßkanalbefüllung durch einen Rotorförderer erfolgt, wo die Förderzinkenspitzen der Förderrechen das Erntegut in unterschiedlichen Förderkurven portionsweise im Zuführkanal vorverdichten bzw. bei geöffneter Einfüllöffnung in den Preßkanal fördern. Die synchron zum Preßkolben verschwenkbare Kurvenbahn wird dabei durch ein mehrgliedriges Koppelgetriebe gesteuert, welches über den Kurbeltrieb der Pleuelstange des Preßkolbens angetrieben wird. Der Kurbeltrieb ist dazu über eine Koppel mit einem Schwenkhebel und einer Koppelstange mit einem Bolzen der Kurvenbahn verbunden, und eine im Bolzen aufgenommene Zugstange besitzt eine Aufnahmeschleife, in der eine Führungsrolle der Nadelschwinge spielgebend umschlossen ist. Mit der Steuerung der Förderrechen soll gleichzeitig ein Rückzug der Bindenadeln ermöglicht werden. Bei dem im Ausführungsbeispiel gezeigten Mechanismus werden sechs Portionen Erntegut pro Kolbenhub durch den Rotorförderer in den Preßkanal gefördert. Dabei werden die ersten vier Erntegutportionen von den Förderzinkenspitzen der Förderrechen im Zuführkanal gegen die durch den Preßkolben verschlossene Einfüllöffnung vorverdichtet, mit der nächsten Portion zur Hälfte und schließlich mit der sechsten Portion vollständig in den Preßkanal gefördert, wobei sich der Preßkolben im Bereich seiner inneren Totpunktlage befindet.

Eine derartige Zuführeinrichtung und Preßkanalbefüllung hat die Nachteile, daß neben der aufwendigen und komplizierten Antriebs- und Steuerungsgestaltung die Gefahr besteht, daß insbesondere bei feinstengligen oder gehäckselten Erntegütern der Portionsstapel umkippt oder zusammenfällt und damit der Preßkanal nur ungleichmäßig ausgefüllt ist und nichtverwertbare Ballen geformt werden.

Der Erfindung liegt deshalb die Aufgabe zugrunde, eine Steuerung der Zuführeinrichtung für Erntegut an Ballenpressen entsprechend einer Ausführungsart nach der DD-A-272983 zu schaffen, wo die vollständige Ausfüllung des Zuführkanals und die Zufuhr des Erntegutes in den Preßkanal mit der letzten, die Einfüllmenge komplettierenden Erntegutportion eines Preßzyklusses in einem Schub erfolgt, so daß die Bildung formstabiler Ballen beim Pressen aller Erntegutarten gesichert ist.

Erfindungsgemäß wird das dadurch erreicht, daß am anderen Ende der am Kurbeltrieb der Pleuelstange für den Preßkolben angeschlossenen Koppel eine Nachlaufkurbel befestigt ist, deren Lagerung in der Preßkanalseitenwand exzentrisch zum Kurbeltrieb vorgesehen ist. Deren ungleichförmige Drehbewegung wird über eine in dieser Lagerung aufgenommenen Welle an eine Steuerkurbel weitergeleitet, die mit der Welle drehfest verbunden ist und sich außerhalb der Preßkanalseitenwand befindet. Das Ende der Steuerkurbel wiederum ist über ein Verbindungsstück mit einem an der Kurvenbahn des Rotorförderers befestigten Bolzen gelenkig verbunden, so daß dadurch die Kurvenbahn entsprechend verschwenkt wird.
Es hat sich als zweckmäßig erwiesen, das Verschwenken der Kurvenbahn kinematisch so zu gestalten, daß sie abwechselnd eine langsame Schwenkbewegung entgegen der Drehrichtung des Rotorförderers ausführt und anschließend eine schnelle Schwenkbewegung in Drehtrichtung des Rotorförderers. Wird der Rotorförderer beispielsweise mit der doppelten Drehzahl wie der Kurbeltrieb für den Preßkolben angetrieben und ist er mit drei Förderrechen besetzt, tauchen die Förderzinken der Förderrechen bei der langsamen Bewegung nacheinander immer etwas eher aus dem Zuführkanal aus und legen dabei fünf Erntegutportionen hintereinander gestaffelt im Zuführkanal ab und befüllen ihn somit fast vollständig.

Bei der schnellen Bewegung wird noch eine sechste Erntegutportion gebildet und mit den vorherigen fünf Erntegutportionen in einem Schub in den Preßkanal befördert.
Eine derartige Steuerung hat die Vorteile, daß durch die langsame Kurvenbahnschwenkung entgegen der Rotordrehrichtung die Relativgeschwindigkeit der Kurvenrolle gegenüber der Kurvenbahn wesentlich verringert wird, was einen geringen Verschleiß der Kurvenbahn bewirkt. Außerdem ist es möglich, sowohl grobstenglige, voluminöse als auch feinstenglige oder gehäckselte Erntegüter in einzelnen Portionen vorzupressen und in den Preßkanal zu fördern, ohne daß der Portionsstapel umkippt oder zusammenfällt.

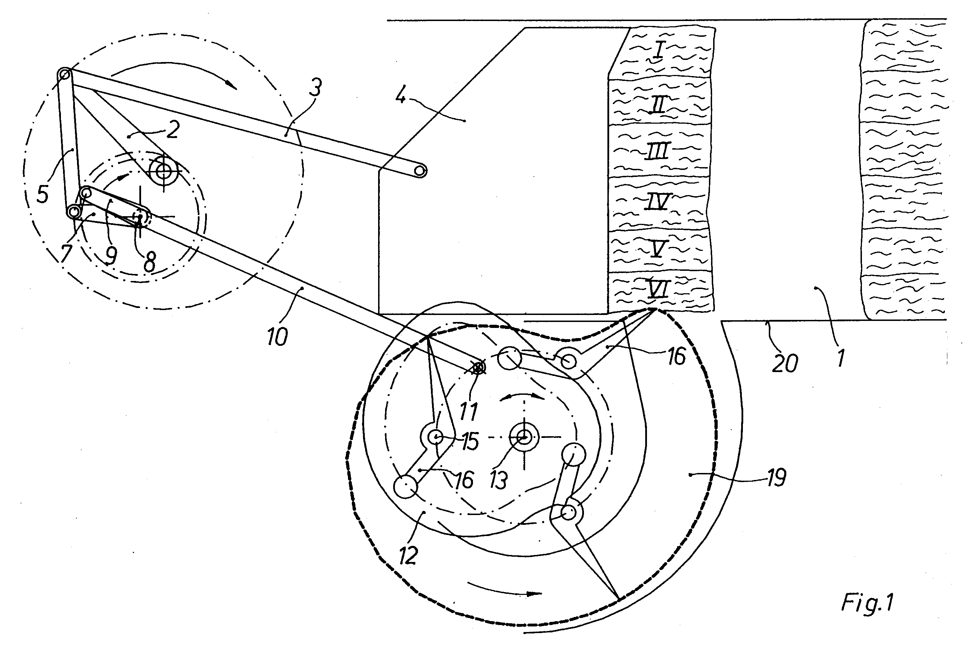

Die Erfindung soll nachstehend an einem Ausführungsbeispiel näher erläutert werden. In den dazugehörigen Zeichnungen zeigt
- Fig. 1:: eine Seitenansicht der Antriebs- und Zuführeinrichtung im Moment des Einschubes in den Preßkanal;

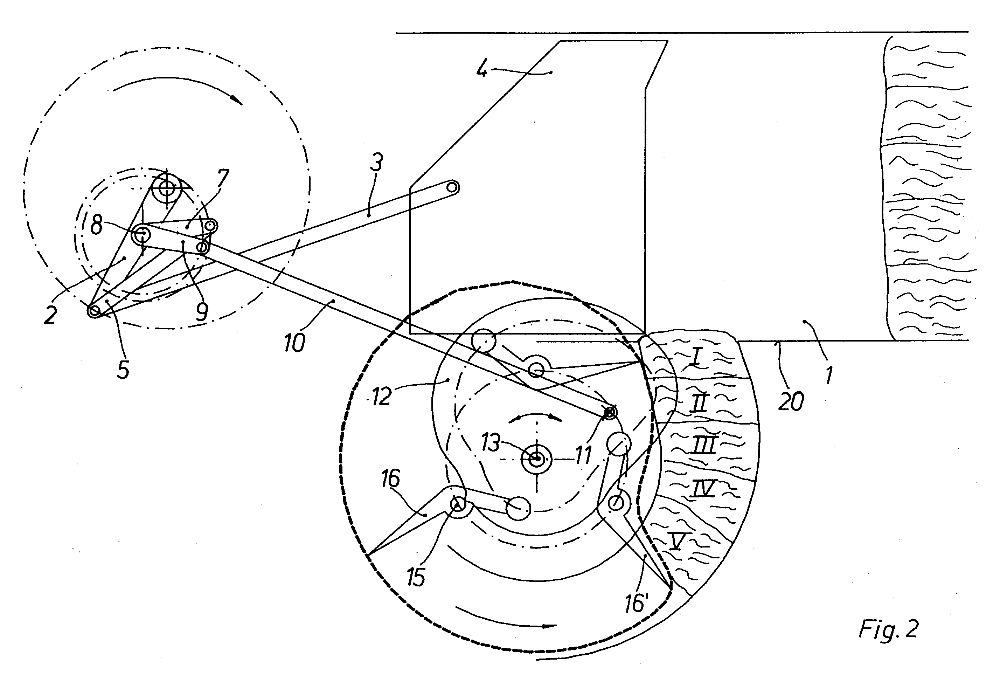

- Fig. 2:: eine Seitenansicht der Antriebs- und Zuführeinrichtung in der Phase der Portionsstapelung im Zuführkanal;

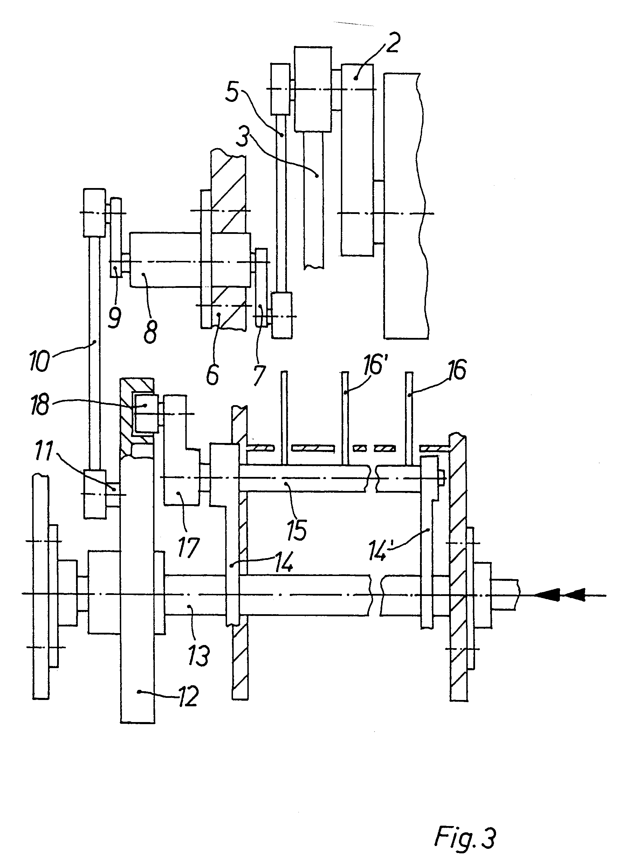

- Fig. 3:: eine Draufsicht, teilweise geschnitten, nach Fig. 1.

Im Preßkanal 1 wird vom Kurbeltrieb 2 über die Pleuelstange 3 der Preßkolben 4 hin- und herbewegt.
Am Kurbeltrieb 2 ist neben der Pleuelstange 3 eine Koppel 5 befestigt, die eine in der Preßkanalseitenwand 6 exzentrisch zum Kurbeltrieb 2 gelagerte Nachlaufkurbel 7 antreibt, die wiederum über eine Welle 8 die umlaufende, ungleichförmige Drehbewegung an eine Steuerkurbel 9 außerhalb des Preßkanales 1 überträgt. An der Steuerkurbel 9 ist ein Verbindungsstück 10 angelenkt, das mit einem Bolzen 11 an der schwenkbaren Kurvenbahn 12 verbunden ist. Die Kurvenbahn 12 ist auf der Rotorwelle 13 gelagert, auf der auch der Rotorförderer aufgenommen ist. Dazu sind die Zinkenwellenträger 14; 14' fest mit der Rotorwelle 13 verbunden. In den Zinkenwellenträgern 14; 14' sind die Zinkenwellen 15 mit den daran befestigten Förderzinken 16; 16' drehbeweglich gelagert. An den Zinwellen 15 ist ein Rollenhebel 17 angebracht, der einen Rollenkörper 18 trägt, der in der schwenkbaren Kurvenbahn 12 geführt wird und die Bewegungen der Förderzinken 16; 16' auslöst und steuert.

Durch die antriebstechnische Gestaltung der Zwischenschaltung einer Nachlaufkurbel 7 und Steuerkurbel 9 zum Antrieb des Rotorförderers läuft der Rotorförderer mit der doppelten Drehzahl des Kurbeltriebes 2. Diesbezüglich ist die Kurvenbahnsteuerung in Form und Anordnung auf der Rotorwelle 13 so abgestimmt, daß die zur gleichmäßigen Preßkanalbefüllung benötigten Erntegutportionen I - VI, die pro Kolbenhub gefördert werden, kurz vor dem Verschließen des Zuführkanales 19 durch den Preßkolben 4 in den Preßkanal 1 geschoben werden. Bei der Förderung der Erntegutportionen I - V tauchen die Förderzinken 16; 16' immer etwas eher aus dem Zuführkanal 19 aus. Die Erntegutportionen I - V werden dabei hintereinander gestaffelt im Zuführkanal 19 abgelegt. Bei der Förderung der Portion V hat die Kurvenbahn 12 die maximale Schwenkbewegung entgegen der Rotordrehrichtung erreicht und die Zinkenwellen 15 mit den Förderzinken 16; 16' tauchen mit dem größten Abstand zum Preßkanalboden 20 aus dem Zuführkanal 19 aus. Damit verbleibt das Erntegut vollständig im Zuführkanal 19 und wird erst mit der letzten Erntegutportion VI in einem Schub in den Preßkanal 1 gefördert.

### Aufstellung der verwendeten Bezugszeichen

- 1: Preßkanal
- 2: Kurbeltrieb
- 3: Pleuelstange
- 4: Preßkolben
- 5: Koppel
- 6: Preßkanalseiterwand
- 7: Nachlaufkurbel
- 8: Welle
- 9: Steuerkurbel
- 10: Verbindungsstück
- 11: Bolzen
- 12: Kurvenbahn
- 13: Rotorwelle
- 14; 14': Zinkenwellenträger
- 15: Zinkenwelle
- 16; 16': Förderzinken
- 17: Rollenhebel
- 18: Rollenkörper
- 19: Zuführkanal
- 20: Preßkanalboden

## Patentansprüche

1. Steuerung der Zuführeinrichtung für Erntegut an Ballenpressen mit unter dem Preßkanal (1) befindlichen Rotorförderer, der in zeitlicher Abstimmung zur Preßkolbenbewegung über durch eine schwenkbare Kurvenbahn (12) gesteuerte Förderzinken (16, 16') das Erntegut erfaßt, in mehreren Portionen in einem Zuführkanal (19) vorverdichtet und danach geschlossen in den Preßkanal (1) fördert und wobei am Kurbeltrieb (2) der Pleuelstange (3) des Preßkolbens (4) eine Koppel (5) angeschlossen ist, dadurch gekennzeichnet, daß die Koppel (5) mit ihrem anderen Ende mit einer in der Preßkanalseitenwand (6) exentrisch zum Kurbeltrieb (2) gelagerten Nachlaufkurbel (7) verbunden ist, deren ungleichmäßige Drehbewegung über eine in genannter Lagerung aufgenommene Welle (8) und einer daran außerhalb des Preßkanales (1) angeordneten Steuerkurbel (9) über ein Verbindungsstück (10), das mit einem Bolzen (11) an der Kurvenbahn (12) befestigt ist, übertragen wird und dementsprechend die Kurvenbahn (12) verschwenkt.

2. Steuerung nach Anspruch 1, dadurch gekennzeichnet, daß die Kurvenbahn (12) in Abhängigkeit von der Preßkolbenbewegung derart antreibbar ist, daß sie abwechselnd eine langsame Schwenkbewegung entgegen der Drehrichtung des Rotorförderers und anschließend eine schnelle Schwenkbewegung in Drehrichtung des Rotorförderers ausführt, wobei in der langsamen Bewegung die Förderzinken (16; 16') nacheinander immer etwas eher aus dem Zuführkanal (19) austauchen und dabei die Erntegutportionen I - V hintereinander gestaffelt im Zuführkanal (19) ablegen und in der schnellen Bewegung die Erntegutportionen I - VI in einem Schub in den Preßkanal (1) befördern.

## Claims

1. Control of the feed equipment for harvested stock at bale presses with a rotor conveyor which is situated below the press channel (1) and, matched in time with the movement of the press piston, seizes the harvested stock by conveying tines (16, 16') controlled by a pivotable cam track (12), preliminarily compacts the harvested stock in several portions in a feed channel (19) and thereafter conveys it closed into the press channel (1), wherein a coupler (5) is connected at the crank drive (2) of the connecting rod (3) of the press piston (4), characterised thereby, that the coupler (5) is connected by its other end with a follower crank (7), which is borne in the press channel side wall (6) eccentrically of the crank drive (2) and the non-uniform rotational movement of which is transmitted by way of a shaft (8), which is received in the mentioned bearing, and a control crank (9), which is arranged at the shaft (8) and externally of the press channel (1), by way of a connecting member (10), which is fastened by a pin (11) at the cam track (12), and accordingly pivots the cam track (12).

2. Control according to claim 1, characterised thereby, that the cam track (12) is drivable in dependence on the movement of the press piston in such a manner that it executes alternately a slow pivotal movement against the direction of rotation of the rotor conveyor and subsequently a rapid pivotal movement in the direction of rotation of the rotor conveyor, wherein the conveying tines (16, 16') during the slow movement always emerge one after the other somewhat earlier from the feed channel (19) and in that case deposit the harvested stock portions I to V staggered one behind the other in the feed channel (19) and during the rapid movement convey the harvested stock I to VI into the press channel (1) in one stroke.

## Revendications

1. Commande du dispositif d'alimentation en fourrage de presses à balles comportant un pousseur rotatif situé en dessous du plancher du canal (1) de la presse et qui, en synchronisme avec le mouvement du piston de la presse, saisit le fourrage par l'intermédiaire de dents d'avancement commandées par une piste de came (12) oscillante, en assure la compression préalable sous la forme de plusieurs portions, dans un canal d'alimentation (19) pour finalement les introduire dans le canal de la presse (1), la manivelle (2) entraînant la bielle (3) du piston (4), de la presse elle-même reliée à une manivelle (5), caractérisée en ce que cette manivelle (5) est reliée par son autre extrémité à une manivelle suiveuse (7) montée sur la paroi latérale (6) du canal de la presse, excentriquement par rapport à la manivelle (2), et dont le mouvement irrégulier de rotation est transmis par l'intermédiaire d'un arbre (8) coaxial à la manivelle (7) à une manivelle (9) située à l'extérieur du canal (1) de la presse et d'une pièce de liaison (10) articulée par un pivot (11) à une piste de came (12) à laquelle elle donne donc un mouvement d'oscillation.

2. Commande selon la revendication 1, caractérisée en ce que la piste de came (12) est entraînée par le mouvement du piston de la presse de manière qu'elle effectue alternativement un lent mouvement de basculement en sens contraire à celui du pousseur rotatif, puis un basculement rapide dans l'autre sens, les dents d'avancement (16, 16') au cours du basculement lent, se substituent les unes aux autres en s'extrayant de plus en plus tôt du canal d'alimentation (19), de sorte qu'elles empilent l'une derrière l'autre les portions I à V de fourrage, cet ensemble des portions I à VI étant introduit dans le canal (1) de la presse, par une poussée exercée au cours du basculement rapide.
